# EUROPÄISCHE PATENTSCHRIFT

(11) **EP 2 781 403 B1**
(45) Veröffentlichungstag und Bekanntmachung des Hinweises auf die Patenterteilung: **18.12.2019**
(21) Anmeldenummer: 14160715.0
(22) Anmeldetag: 19.03.2014
(51) Int. Cl.: B60P 1/04

(54) **Vorrichtung und Verfahren zur Überwachung der Entladung eines Kippfahrzeuges**
Device and method for monitoring the unloading of a tipping vehicle
Dispositif et procédé de surveillance du déchargement d'un véhicule inclinable

(30) Priorität: 19.03.2013 DE 102013102791
(43) Veröffentlichungstag der Anmeldung: 24.09.2014
(73) Patentinhaber: Schmitz Cargobull Gotha GmbH, 99867 Gotha (DE); KNORR-BREMSE Systeme für Nutzfahrzeuge GmbH, 80809 München (DE)
(72) Erfinder: Eberle, Reinhard, 89155 Erbach (DE); Hey, Jeffrey, 99867 Gotha (DE); Flach, Oskar, 35037 Marburg (DE); Mederer, Martin, 92318 Neumarkt-Rittershof (DE); Bühling, Simon, 80796 München (DE); Fry, Matthew, Bristol, Bristol BS48 1PP (GB); Andrews, Tim, Bristol, Bristol BS30 5WB (GB)
(74) Vertreter: Baur & Weber Patentanwälte PartG mbB

(56) Entgegenhaltungen:
- EP-A1- 2 364 877
- WO-A1-87/02128
- GB-A- 2 046 957

## Beschreibung

Die Erfindung betrifft eine Vorrichtung und ein Verfahren zur Überwachung eines Kippfahrzeuges, insbesondere eines mit Schüttgut beladenen Kippfahrzeugs.

Kippfahrzeuge werden mit einer Vielzahl unterschiedlicher Ladungen befüllt. So wird beispielsweise im Baustellenbetrieb ein Kippfahrzeug mit Ladungen wie Sand, Kies oder Erdreich befüllt. Diese unterschiedlichen Ladungen weisen jedoch beim Abkippen ein unterschiedliches Rutschverhalten auf, so dass die Fahrerin oder der Fahrer des Kippfahrzeugs einen Kippaufbau mit unterschiedlichen Kippwinkeln ansteuern muss, um ein Abgleiten der Ladung aus dem Kippaufbau zu erreichen. Lose, trockene Ladungen wie Sand oder Kies rutschen dabei bei einem geringeren Kippwinkel aus dem Kippaufbau heraus, während feuchtes oder gefrorenes Ladungsgut, wie z. B. Erdreich, an dem Kippaufbau anhaftet und erst bei größeren Kippwinkeln ausgleitet.

Diese unterschiedlichen Eigenschaften des Schüttguts führen im Baustellenbetrieb oftmals zu Problemen. Sollte die Ladung zu sehr am Kippaufbau anhaften, so ist zu beobachten, dass die Fahrerin oder der Fahrer den Kippaufbau mehrmals bis zu einer maximalen Auslenkung aufstellt, um die Ladung zu lösen.

Dies kann zum einen zu einem erhöhten Verschleiß der Kippvorrichtung führen, die üblicherweise als teleskopartige Hydraulikvorrichtung bereitgestellt wird, und bei diesem Vorgang einer erhöhten Belastung unterzogen ist. Dies führt zu einem erhöhten Verschleiß und somit zu einem erhöhten Wartungsbedarf der Hydraulikvorrichtung.

Zum anderen ist es auch möglich, dass der Kippwinkel des Kippaufbaus so weit erhöht wird, dass das Kippfahrzeug nicht mehr sicher steht. Sollte die Ladung den Kippaufbau ab einem gewissen Kippwinkel noch nicht verlassen haben, kann ein bereits geringes Schrägstehen des Kippfahrzeugs zu einem Umkippen des Fahrzeugs führen.

Aus der EP 2 364 877 A1 ist eine Kippzustandsüberwachung bekannt, die zur Überwachung des Kippzustands einer an einem Kipperaufbau eines Kippfahrzeugs angeordneten Kippmulde, die wenigstens eine Richtung bezogen auf dem Kipperaufbau schwenkbar am Kipperaufbau gelagert ist, und mit wenigstens einem die Kippmulde in unterschiedliche Kippzustände bewegenden hydraulischen Teleskopzylinder versehen ist. In dieser Druckschrift wird vorgeschlagen, dass zuerst ein Erhöhen des Hydraulikdrucks in dem Teleskopzylinder erfolgt, um die Kippmulde zum Ausschütten von Ladegut zu bewegen. Anschließend erfolgt ein Erfassen des im Teleskopzylinder wirksamen Drucks und Bestimmen des aktuellen Kippwinkelbereiches.

Die gattungsgemäße WO 87/02128 A1 gibt ein Überwachungssystem für ein Transportfahrzeug an, bei dem Lastsensoren entlang der Fahrzeuglängsachse angebracht sind um die Beladung zu messen und Neigungssensoren zur Messung des Kippwinkels vorgesehen sind. Eine Recheneinheit wertet die Daten der Sensoren aus und bestimmt einen zulässigen Kippwinkel. Dieser Kippwinkel wird auf einer Anzeigeeinheit angegeben.

Es besteht in der Technik ein Bedarf, den Entladevorgang eines Kippfahrzeugs zuverlässig zu überwachen, um eingangs genannte Probleme zu überwinden.

Es ist daher Aufgabe der Erfindung, eine Vorrichtung zur Überwachung der Entladung eines Kippfahrzeugs zu schaffen bzw. ein Verfahren zur Überwachung der Entladung eines Kippfahrzeugs anzugeben, das auf einfache Weise beim Entladevorgang ein Anhaften der Ladung in einem Kippaufbau feststellen kann.

Diese Aufgabe wird durch die Merkmale der Patentansprüche 1 und 14 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird in ihrem ersten Aspekt eine Vorrichtung zur Überwachung der Entladung eines Kippfahrzeugs, insbesondere eines mit Schüttgut als Ladung beladenen Kippfahrzeugs, angegeben, die einen mit einer Ladung zu füllenden Kippaufbau, insbesondere eine Kippmulde eines Kippsattelanhängers, und eine mit dem Kippaufbau verbundene Sensoreinrichtung umfasst, die geeignet ist, einen Schwerpunkt des Kippaufbaus beim Kippen des Kippaufbaus zu bestimmen, um das Entladen der Ladung festzustellen.

Bei der erfindungsgemäßen Vorrichtung bestimmt die Sensoreinrichtung den Schwerpunkt des Kippaufbaus während des Entladens der Ladung. Sobald der Kippaufbau gekippt wird, verschiebt sich der Schwerpunkt des Gesamtsystems bestehend aus Ladung und Eigengewicht des Kippaufbaus in Fahrtrichtung gesehen nach hinten. Wenn nun die Ladung aus dem Kippaufbau heraus rutscht, verändert sich der Schwerpunkt ruckartig, so dass das erfolgreiche Abladen der im Kippaufbau befindlichen Ladung detektiert werden kann. Sollte die Ladung jedoch in dem Kippaufbau anhaften, wird eine maximale Auslenkung des Kippaufbaus erreicht, ohne dass sich der Schwerpunkt entsprechend verändert. Durch Bestimmung des Schwerpunkts des Kippaufbaus kann somit für eine Vielzahl unterschiedlicher Ladungstypen, beispielsweise Sand, Kies oder Erdreich, auf einfache Weise eine zuverlässige Kontrolle des Entladevorgangs des Kippfahrzeugs erreicht werden.

Gemäß einer Ausführungsform der Erfindung bestimmt die Sensoreinrichtung eine Gewichtskraft des Kippaufbaus und einen Kippwinkel des Kippaufbaus zu dem Kippfahrzeug.

Demgemäß ist es möglich, die Berechnung des Schwerpunkts in Abhängigkeit des Kippwinkels des Kippaufbaus und einer Kraftkomponente durchzuführen, so dass aus einer Verknüpfung dieser Größen der Schwerpunkt bestimmt werden kann.

Gemäß einer weiteren Ausführungsform der Erfindung bestimmt die Sensoreinrichtung an einem ersten Punkt des Kippaufbaus und an einem vom ersten Punkt verschiedenen zweiten Punkt jeweils eine Gewichtskraft des Kippaufbaus.

Eine Schwerpunktbestimmung kann sowohl über den Kippwinkel und eine Kraftkomponente als auch über zwei an verschiedenen Punkten aufgenommenen Kraftkomponenten erfolgen.

Für die Messung des Kippwinkels wird vorgeschlagen, einen Drehsensor oder einen Beschleunigungssensor zu verwenden, der den Kippwinkel des Kippauflegers bestimmt.

Ein Drehsensor lässt sich zwischen Kippaufbau und Chassis des Kippfahrzeugs anbringen, so dass ohne große konstruktive Maßnahmen eine einfache und zuverlässige Messung des Kippwinkels erfolgt. Der Drehsensor kann das Kippen des Kippaufbaus beispielsweise über ein Potentiometer in ein elektrisches Signal umsetzen. Der Beschleunigungssensor wird an dem Kippaufbau angebracht, so dass aus den gemessenen Beschleunigungswerten auf die aktuelle Position und damit den Kippwinkel des Kippaufbaus zurückgeschlossen werden kann.

Zur Messung der Gewichtskraft werden mehrere Möglichkeiten vorgeschlagen. So kann die Sensoreinrichtung zur Bestimmung der Gewichtskraft eine Messeinrichtung einer Luftdruckfederung aufweisen, die einen Luftdruck der Luftfederung bestimmt.

Viele Kippfahrzeuge, insbesondere Kippsattelanhänger, werden heutzutage mit einer Luftfederung ausgestattet, die über ein Erhöhen oder Erniedrigen des Luftdrucks in der Luftfederung auf unterschiedliche Beladezustände angepasst werden kann. Beispielsweise sind Luftfederungen üblich, die mit einem Druck bis zu 10 bar, typischerweise etwa 6 bar befüllt werden. Um die Befüllung der Luftfederung kontrollieren zu können, ist ein entsprechender Drucksensor vorgesehen, der als Messeinrichtung verwendet werden kann, so dass das Ausgangssignal des Drucksensors der Sensoreinrichtung zur Verfügung steht. Folglich ist es möglich, eine Gewichtskraft des Kippaufbaus zu bestimmen, ohne zusätzliche Sensormittel bereitstellen zu müssen, da die bereits ohnehin vorhandenen Drucksensoren der Luftfederung verwendet werden. Dies ermöglicht eine kostengünstige und einfache Realisierung der Überwachung des Entladevorgangs der Ladung.

Ebenso ist es möglich, dass die Sensoreinrichtung zur Bestimmung der Gewichtskraft einen vorzugsweise als Druckplatte ausgebildeten Kraftsensor umfasst, der eine Auflagekraft des Kippaufbaus an einer Kippachse bestimmt.

Der Kippaufbau ist üblicherweise um eine Kippachse schwenkbar, die in Fahrtrichtung gesehen am hinteren Ende des Kippfahrzeugs angeordnet ist. Der Kippaufbau liegt auf dieser Kippachse auf, und die Auflagekraft kann durch einen entsprechenden Kraftsensor bestimmt werden. Diese Auflagekraft kann zur Schwerpunktbestimmung des Kippaufbaus herangezogen werden, um das Entladen der Ladung zu überwachen.

Außerdem kann die Sensoreinrichtung einen zur Bestimmung der Gewichtskraft einen Drucksensor umfassen, der eine Druckkraft einer zum Kippen des Kippaufbaus vorgesehenen Teleskopvorrichtung bestimmt.

Der Druck im Inneren der zum Kippen bereitgestellten Teleskopeinrichtung kann ebenfalls zur Bestimmung einer Gewichtskraft und damit zur Schwerpunktberechnung herangezogen werden.

Des Weiteren ist es denkbar, dass die Sensoreinrichtung einen zur Bestimmung der Gewichtskraft einen Reifendrucksensor umfasst, der einen Reifendruck eines oder mehrerer Reifen einer unterhalb des Kippaufbaus angeordneten Achse bestimmt.

Der Reifendruck unterhalb des Kippaufbaus kann ebenfalls zur Bestimmung einer Gewichtskraft und damit zur Schwerpunktberechnung herangezogen werden. Systeme zur Messung des Reifendrucks sind heutzutage bei vielen Kippfahrzeugen bereits eingebaut, so dass eine kostengünstige Sensoreinrichtung geschaffen wird. Dabei muss jedoch eine eventuell vorhandene Luftfederung entleert werden, was jedoch zur Erhöhung der Standfestigkeit des Kippfahrzeugs beim Einladen häufig durchgeführt wird.

Die vorstehend geschilderten Ausführungsformen zur Bestimmung der Gewichtskraft können sowohl einzeln in Kombination mit der Winkelmessung als auch paarweise durchgeführt werden. Ebenso ist es möglich, mehrere Möglichkeiten zur Bestimmung der Gewichtskraft parallel auszuführen und auszuwerten, um beispielsweise die Genauigkeit der Berechnung steigern zu können, die Zuverlässigkeit zu erhöhen oder Redundanz zu schaffen. Allen geschilderten Ausführungsformen zur Bestimmung der Gewichtskraft ist zu eigen, dass sie ohne großen Aufwand realisierbar sind beziehungsweise auf bereits vorhandene Einrichtungen zurückgreifen.

Gemäß einer weiteren Ausführungsform der Erfindung gibt die Sensorrichtung bei einem ausbleibenden Abrutschen der Ladung ab einem einstellbaren Kippwinkel der Kippeinrichtung ein Signal aus.

Demgemäß wird die Überwachung der Entladung des Kippaufbaus in Abhängigkeit des Kippwinkels durchgeführt, so dass bei anhaftender Ladung ab einem bestimmten Kippwinkel ein Warnsignal abgegeben wird, so dass ein problematisches Entladen beispielsweise durch stark anhaftende oder festgefrorene Ladung, wie feuchtes Erdreich oder dergleichen, signalisiert wird.

In einer weiteren Ausführungsform der Erfindung unterbindet das Signal ein weiteres Kippen der Kippeinrichtung, gibt ein optisches oder akustisches Warnsignal an Bedienpersonal ab oder initiiert eine Aufzeichnung in einem Datenschreiber.

Nicht abrutschende Ladung führt ab einem gewissen Kippwinkel zu vielerlei Problemen, wie bereits eingangs beschrieben wurde. Sobald ein entsprechender Zustand mittels des Signals der Warneinrichtung detektiert wird, ist es möglich, ein weiteres Kippen der Kippeinrichtung zu verhindern. Demzufolge kann ein Zustand verhindert werden, in dem beispielsweise das Kippfahrzeug umkippt. Ebenso ist es vorgesehen, dass ein optisches oder akustisches Warnsigal abgegeben wird, das sowohl das Bedienpersonal als auch andere sich in der Umgebung des Kippfahrzeugs aufhaltende Personen zu warnen. Schließlich wird eine Aufzeichnung in einem Datenschreiber beschrieben, die mittels des Signals der Warneinrichtung initiiert werden kann. Dabei nicht abrutschende Ladung und einem großen Kippwinkel hohe Kräfte auf die Teleskopeinrichtung zum Kippen des Kippaufbaus wirken, kann mittels des Datenschreibers ein erhöhter Wartungsaufwand protokolliert werden. Der Datenschreiber kann beispielsweise während einer Wartung des Kippfahrzeugs ausgelesen werden, so dass häufiges problematisches Abkippen für das Servicepersonal entsprechend zu erkennen ist. Desweiteren kann der Datenschreiber auch im Falle eines Umkippens des Kippfahrzeugs zu Dokumentationszwecken herangezogen werden.

In einer weiteren Ausführungsform der Erfindung ist die Sensoreinrichtung darüber hinaus mit einem Neigungswinkelsensor versehen, der eine Seitenneigung des Kippfahrzeugs ausgibt.

Beim Entladevorgang auf einer unebenen Oberfläche ist das Kippfahrzeug bereits so abgestellt, dass eine Seitenneigung auftritt. Da ein seitlich geneigtes Kippfahrzeug wesentlich instabiler ist, muss der maximal mögliche Kippwinkel des Kippaufbaus entsprechend geringer gewählt werden, um einen sicheren Stand des Kippfahrzeugs während des Entladevorgangs zu gewährleisten.

Gemäß einer weiteren Ausführungsform der Erfindung signalisiert die Sensoreinrichtung ein Abrutschen der Ladung, um das erfolgreiche Entladen der Ladung anzuzeigen.

Demgemäß wird der Fahrerin oder dem Fahrer des Kippfahrzeugs mitgeteilt, dass nunmehr der Kippaufbau entleert wurde, so dass der Kippvorgang beendet werden kann. Dies ermöglicht eine zeitsparende Entladung des Kippfahrzeugs.

Gemäß der Erfindung wird auch ein Verfahren zur Überwachung der Entladung eines Kippfahrzeugs angegeben, bei dem folgende Schritte ausgeführt werden:
- Bereitstellen eines Kippaufbaus eines Kippfahrzeugs,
- Bereitstellen einer Sensoreinrichtung, die mit dem Kippaufbau verbunden ist,
- Kippen des Kippaufbaus, um einen Entladevorgang des mit Schüttgut gefüllten Kippaufbaus zu beginnen, und
- Überwachen des Schwerpunkts des Kippaufbaus während des Entladevorgangs mittels der Sensoreinrichtung.

Bei dem Verfahren kann eine Kennlinie bereitgestellt werden, die bei fortschreitendem Aufstellen des Kippaufbaus die gemessenen Gewichtskräfte verknüpft, um den Schwerpunkt des Kippaufbaus zu bestimmen.

Demgemäß können die Messwerte der Sensoreinrichtung mit der Kennlinie verglichen werden, die die Lageveränderung des Schwerpunkts während eines Entladens abbildet.

Das beschriebene Verfahren sowie die vorteilhaften Ausgestaltungen können in einem Kippfahrzeug, insbesondere in einer Steuereinheit eines Kippsattelanhängers oder einer Steuereinheit eines Fahrzeugs mit Kippsattelanhänger vorgesehen sein. Dazu wird ein Mikroprozessor oder dergleichen mit einem entsprechenden Programm geladen. Das Programm kann derart beschaffen sein, dass es die hier beschriebenen Verfahren verkörpert bzw. auszuführen imstande ist, sodass der Mikroprozessor die Schritte solcher Verfahren ausführen kann und damit die beschriebene Sensoreinrichtung des Kippfahrzeugs steuern kann.

Desweiteren wird ein Kippsattelanhänger beschrieben, der eine oben angegebene Vorrichtung zur Überwachung der Entladung aufweist.

Nachfolgend werden einige Ausführungsbeispiele anhand der Zeichnung näher erläutert. Es zeigen:
- Fig. 1: einen Kippsattelzug in einer Seitenansicht gemäß einer ersten Ausführungsform der Erfindung;
- Fig. 2: der Kippsattelzug aus Fig. 1 mit einer gekippten Kippmulde;
- Fig. 3: einen Kippsattelzug in einer Seitenansicht gemäß einer zweiten Ausführungsform der Erfindung;
- Fig. 4: einen Kippsattelzug in einer Seitenansicht gemäß einer dritten Ausführungsform der Erfindung;
- Fig. 5: einen Kippsattelzug in einer Seitenansicht gemäß einer vierten Ausführungsform der Erfindung;
- Fig. 6: eine weitere Ausführungsform der Erfindung in einer schematischen Ansicht.

In den Figuren sind gleiche oder funktional gleich wirkende Bauteile mit den gleichen Bezugszeichen versehen.

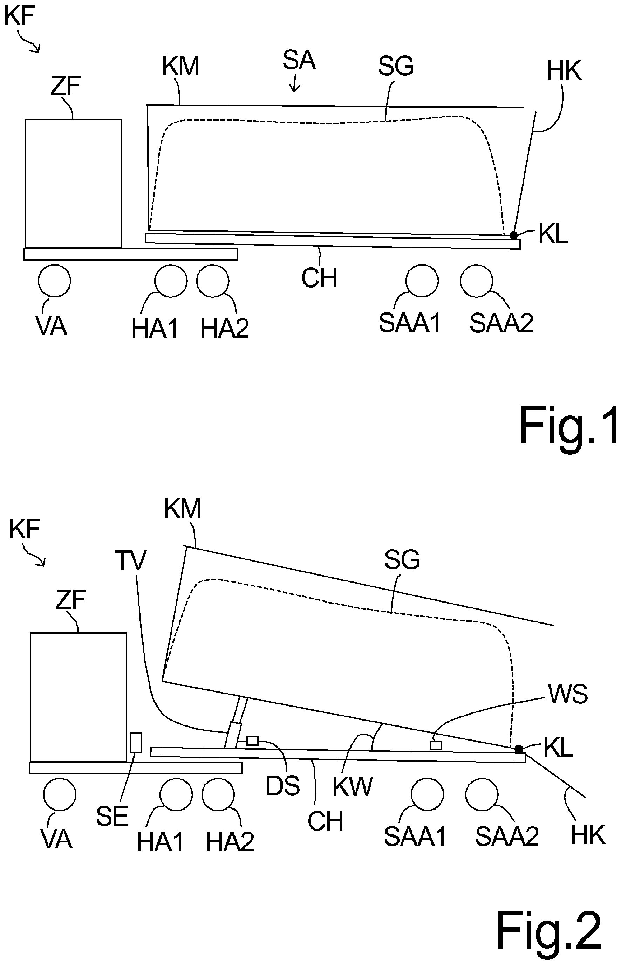

In Fig. 1 ist schematisch ein Kippfahrzeug KF gezeigt, das aus einem Zugfahrzeug ZF und einem Kippsattelanhänger in Form eines Sattelaufliegers SA gebildet wird. Der Sattelauflieger SA kann in fachüblicher Weise mit dem Zugfahrzeug ZF verbunden sein, beispielsweise mittels eines nicht in Fig. 1 gezeigten Königszapfens.

In Fig. 1 ist das Zugfahrzeug mit einer Vorderachse VA und einer ersten Hinterachse HA1 und einer zweiten Hinterachse HA2 gezeigt. Der Sattelauflieger SA weist zwei Sattelaufliegerachsen SAA1 und SAA2 auf, die mit einem in Form von Querträgern und Längsträgern ausgebildeten Chassis CH des Sattelaufliegers SA verbunden sind. Es versteht sich von selbst, dass die Erfindung nicht auf die gezeigte Konfiguration beschränkt ist, so dass Kippfahrzeuge KF mit einer unterschiedlichen Konfiguration von Achsen verwendet werden können.

Auf dem Chassis CH ist eine Kippmulde KM angeordnet, die zur Entladung von einer Ladung, die in Fig. 1 als Schüttgut SG angedeutet ist, mit einer Heccklappe HK versehen ist. Zum Entladen des Schüttguts SG weist die Kippmulde darüber hinaus ein Kipplager KL als Kippachse auf, das in Fahrtrichtung gesehen am hinteren Ende des Sattelaufliegers SA angeordnet ist. Zum Ankippen der Kippmulde KM weist der Sattelauflieger SA eine Teleskopvorrichtung auf, die geeignet ist, die Kippmulde KM anzuheben, so dass zwischen der unteren Begrenzung der Kippmulde und dem Chassis CH ein bestimmter Kippwinkel einstellbar ist.

In Fig. 2 ist schematisch das Kippfahrzeug KF aus Fig. 1 gezeigt, nachdem die Kippmulde KM mittels der Teleskopvorrichtung TV angehoben wurde. Zwischen dem Boden BO der Kippmulde KM und dem Chassis CH stellt sich somit ein Kippwinkel KW ein.

Um nun die Entladung des mit Schüttgut SG beladenen Kippfahrzeugs KF überwachen zu können, ist eine Sensoreinrichtung SE vorgesehen, die während des Entladens eine Schwerpunktsbestimmung der durch das Schüttgut SG gebildeten Ladung bestimmt.

Die Sensoreinheit SE kann das Herausgleiten des Schüttguts SG aus der Kippmulde KM auf mehrere Weise überwachen.

In einer ersten Ausführungsform weist der Sattelauflieger SA einen Drucksensor DS auf, der den Druck innerhalb der Teleskopvorrichtung TV während des Ankippens der Kippmulde KM bestimmt. Typischerweise werden Teleskopvorrichtungen TV für Kippfahrzeuge KF mit einem Hydraulikdruck bis ungefähr 200 bar betrieben, so dass beispielsweise bei Erreichen eines Kippwinkels von 45° der Druck in der Hydraulikvorrichtung auf 85 bar zurück gehen würde. Diese Druckverhältnisse treten beispielsweise auf, wenn das Schüttgut SG eine Masse von ungefähr 25000 Kg aufweist. Sobald die Ladung, d. h. das Schüttgut SG aus der Kippmulde KM heraus gleitet, würde der Druck entsprechend abnehmen.

Folglich kann in Abhängigkeit des Kippwinkels KW der Kippmulde KM eine Kennlinie erstellt werden, die die Abnahme der Druckkraft in der Teleskopvorrichtung TV wiedergibt. Diese Kennlinie zeigt somit einen Zustand an, bei dem beispielsweise das Schüttgut an der Kippmulde KM fest klebt oder beispielsweise fest gefroren ist. Sobald nun das Schüttgut SG aus der Kippmulde KM heraus gleitet, registriert der Drucksensor DS eine spontane Reduzierung der Druckkraft, so dass das Entladen der Ladung überwacht werden kann.

Bei der in Fig. 2 gezeigten Vorrichtung wird die Abstützkraft der Kippmulde anhand des Kippwinkels KW und der Druckkraft im Drucksensor DS bestimmt. Um den Kippwinkel KW bestimmen zu können, kann es z. B. vorgesehen sein, einen mechanischen Drehsensor als Winkelsensor WS zu verwenden, der über einen steuerbaren Widerstand ähnlich eines Potentiometers die Lage der Kippmulde KM wiedergibt. Es ist aber auch möglich, die Kippmulde KM mit einem Beschleunigungssensor (nicht in Fig. 2 gezeigt) zu verbinden, so dass über eine Beschleunigungsmessung der Kippmulde KM deren aktuelle Position und damit der Kippwinkel bestimmt werden können.

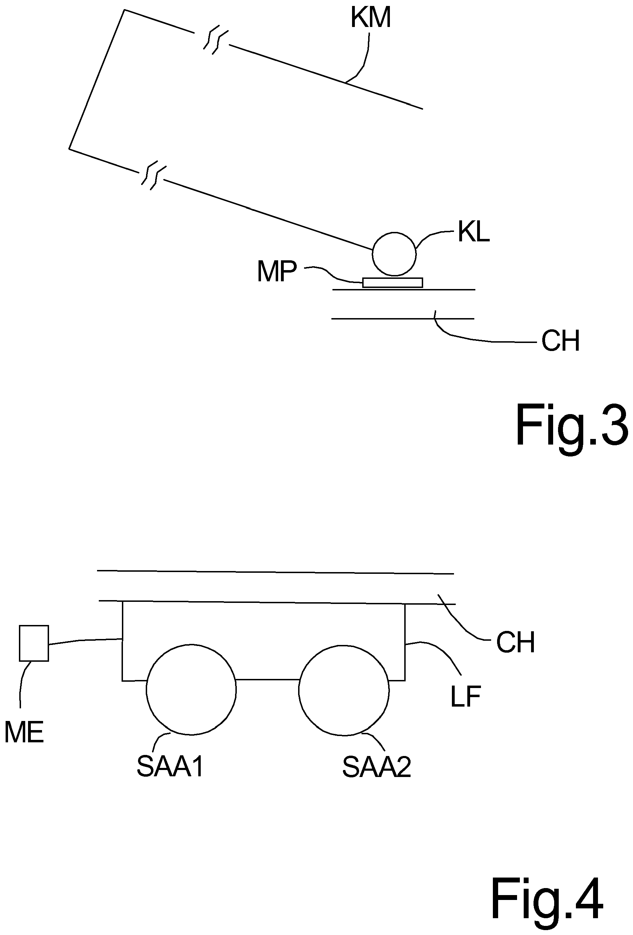

In Fig. 3 ist eine weitere Ausführungsform der Erfindung gezeigt. Gemäß dieser Ausführungsform wird der Kippwinkel KW der Kippmulde KM nicht bestimmt. Es ist jedoch eine Messplatte MP vorgesehen, die die Auflagekraft der Kippmulde KM unterhalb des Kipplagers KL bestimmt. Durch Bestimmung der Auflagekraft am hinteren Ende, d. h. am Kipplager KL und der Druckkraft in der Teleskopvorrichtung TV kann nun ebenfalls ein Herausgleiten des Schüttguts SG durch Veränderung der Schwerpunktslage der Ladung bestimmt werden.

In Fig. 4 ist eine weitere Ausführungsform der Erfindung gezeigt. Gemäß dieser Ausführungsform sind die Sattelaufliegerachsen SAA1 und SAA2 über eine Druckfederung DF mit dem Chassis CH verbunden. Die Luftfederung LF ist mit einer entsprechenden Messeinrichtung verbunden, die die Druckkraft im Inneren der Luftdruckfederung bestimmt. Die Messeinrichtung ME liefert somit ein Signal, das beispielsweise anstatt des Signals der Messplatte MP aus Fig. 3 zur Überwachung der Entladung des Schüttgutes SG herangezogen werden kann. Dies setzt jedoch voraus, dass die Luftfederung LF nicht bereits vollständig entleert wurde, was jedoch üblicherweise beim Entladen eines Sattelaufliegers SA geschieht, um einen stabileren Stand während des Entladens zu erreichen.

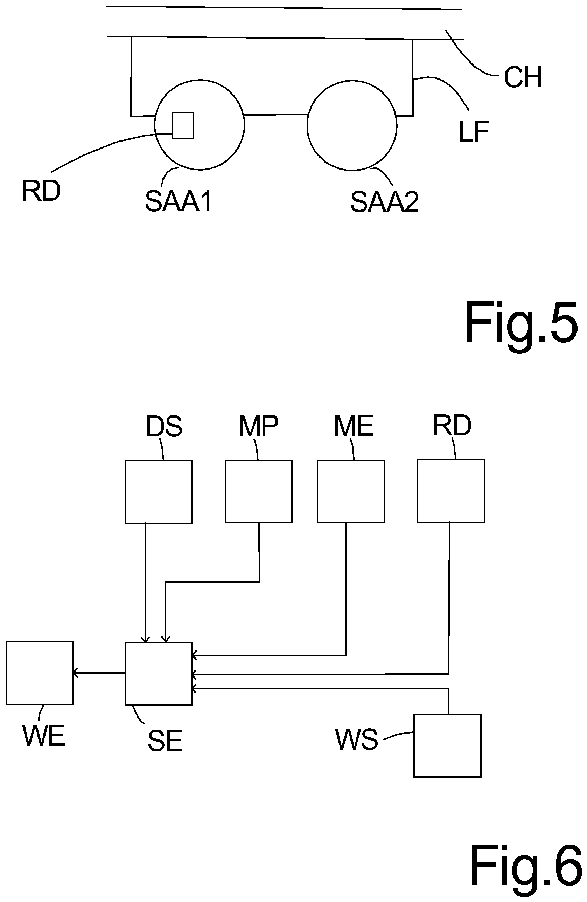

In Fig. 5 ist eine weitere Ausführungsform der Erfindung gezeigt. Hier wird die Gewichtskraft des Sattelaufliegers SA während des Entladens durch den Luftdruck in einer der beiden Achsen SAA1 oder SAA2 bestimmt. Der Luftdruck ändert sich ebenfalls, wenn die Ladung in Form des Schüttguts SG beginnt aus der Kippmulde KM zu rutschen. Dazu ist ein Reifendruckmessgerät RD vorgesehen, das den Reifendruck an die Sensoreinheit SE übermittelt.

Bei den vorstehend beschriebenen Ausführungsformen werden jeweils zwei Messsignale verwendet, um eine Schwerpunktsverlagerung der Ladung innerhalb der Kippmulde KM zu bestimmen. Dabei kann entweder eine Kraftmessung, beispielsweise über die Teleskopvorrichtung TV, der Messplatte MP, der Luftfederung LF oder des Reifendrucks RD mit einer Messung des Kippwinkels KW kombiniert werden, um eine winkelabhängige Kennlinie während des Entladevorgangs bereitzustellen. Es ist aber auch möglich, anstelle des Winkels zwei Kraftmessungen durchzuführen. Dazu wird die Druckkraft des Drucksensors DS innerhalb der Teleskopvorrichtung TV entweder mit der Druckkraft der Messplatte MP, der Luftfederung LF oder des Reifendrucks RD kombiniert. Aus der Änderung des Verhältnisses der auftretenden Kräfte kann ebenfalls auf den Kippwinkel KW zurück geschlossen werden, und es kann eine entsprechende Kalibrierung erfolgen, um ein Herausgleiten der Ladung bestimmen zu können.

Die Sensoreinrichtung SE ist desweiteren mit einer Warneinrichtung WE versehen, wie in Fig. 6 gezeigt ist. Bei einem ausbleibenden Abrutschen des Schüttguts SG kann die Warneinrichtung WE ein Signal abgeben. Dies kann ab einem vorher bestimmten Kippwinkel KW geschehen, und kann herangezogen werden, um ein weiteres Kippen der Kippmulde KM zu unterbinden, um das Fahrzeug KF beziehungsweise den Sattelauflieger SA weiterhin in einem stabilen Zustand zu halten.

Desweiteren ist es vorgesehen, dass die Warneinrichtung WE ein optisches oder akustisches Warnsignal abgibt oder eine Aufzeichnung in einem Datenschreiber aktiviert, um diese für den Sattelauflieger SA und insbesondere die Teleskopvorrichtung TV stark beanspruchende Stellung dokumentieren zu können. Das erfolgreiche Abrutschen der Ladung kann ebenfalls signalisiert werden, um das Ende des Entladevorgangs anzuzeigen.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Vorrichtung zur Überwachung der Entladung eines Kippfahrzeugs (KF), insbesondere eines mit Schüttgut (SG) als Ladung beladenen Kippfahrzeugs (KF), die einen mit einer Ladung zu füllenden Kippaufbau, insbesondere eine Kippmulde (KM) eines Kippsattelanhängers, und eine mit dem Kippaufbau verbundene Sensoreinrichtung (SE) umfasst, **dadurch gekennzeichnet, dass** die Sensoreinrichtung geeignet ist, einen Schwerpunkt des Kippaufbaus beim Kippen des Kippaufbaus zu bestimmen, um das Entladen der Ladung festzustellen.

2. Vorrichtung nach Anspruch 1, bei der die Sensoreinrichtung (SE) eine Gewichtskraft des Kippaufbaus und einen Kippwinkel des Kippaufbaus zu dem Kippfahrzeug (KF) bestimmt.

3. Vorrichtung nach Anspruch 2, bei der die Sensoreinrichtung (SE) an einem ersten Punkt des Kippaufbaus und an einem vom ersten Punkt verschiedenen zweiten Punkt jeweils eine Gewichtskraft des Kippaufbaus bestimmt.

4. Vorrichtung nach einem der Ansprüche 2 bis 3, bei der die Sensoreinrichtung (SE) zur Bestimmung der Gewichtskraft eine Messeinrichtung einer Luftdruckfederung umfasst, die einen Luftdruck der Luftfederung (LF) bestimmt.

5. Vorrichtung nach einem der Ansprüche 2 bis 3, bei der die Sensoreinrichtung (SE) zur Bestimmung der Gewichtskraft einen vorzugsweise als Druckplatte ausgebildeten Kraftsensor umfasst, der eine Aufliegekraft des Kippaufbaus an einer Kippachse bestimmt.

6. Vorrichtung nach einem der Ansprüche 2 bis 3, bei der die Sensoreinrichtung (SE) einen zur Bestimmung der Gewichtskraft einen Drucksensor (DS) umfasst, der eine Druckkraft einer zum Kippen des Kippaufbaus vorgesehenen Teleskopvorrichtung (TV) bestimmt.

7. Vorrichtung nach einem der Ansprüche 2 bis 3, bei der die Sensoreinrichtung (SE) einen zur Bestimmung der Gewichtskraft einen Reifendrucksensor (RD) umfasst, der einen Reifendruck eines oder mehrerer Reifen einer unterhalb des Kippaufbaus angeordneten Achse (SAA) bestimmt.

8. Vorrichtung nach einem der Ansprüche 1 bis 7, bei der die Sensoreinrichtung (SE) einen Drehsensor umfasst, der den Kippwinkel des Kippaufbaus bestimmt.

9. Vorrichtung nach einem der Ansprüche 1 bis 7, bei der die Sensoreinrichtung (SE) einen Beschleunigungssensor umfasst, der den Kippwinkel des Kippaufbaus bestimmt.

10. Vorrichtung nach einem der Ansprüche 1 bis 9, bei der die Sensoreinrichtung (SE) bei einem ausbleibenden Abrutschen der Ladung ab einem einstellbaren Kippwinkel des Kippaufbaus ein Signal abgibt.

11. Vorrichtung nach Anspruch 10, bei der das Signal ein weiteres Kippen des Kippaufbaus unterbindet, ein optisches oder akustisches Warnsignal (WE) abgibt oder eine Aufzeichnung in einem Datenschreiber aktiviert.

12. Vorrichtung nach einem der Ansprüche 1 bis 11, bei der die Sensoreinrichtung (SE) darüber hinaus mit einem Neigungswinkelsensor verbunden ist, der eine Seitenneigung des Kippfahrzeugs ausgibt.

13. Vorrichtung nach einem der Ansprüche 1 bis 12, bei der die Sensoreinrichtung (SE) ein Abrutschen der Ladung signalisiert, um das Ende des Entladevorgangs anzuzeigen.

14. Verfahren zur Überwachung der Entladung eines Kippfahrzeugs, bei dem folgende Schritte ausgeführt werden:
- Bereitstellen eines Kippaufbaus eines Kippfahrzeugs (KF),
- Bereitstellen einer Sensoreinrichtung (SE), die mit dem Kippaufbau verbunden ist,
- Kippen des Kippaufbaus, um einen Entladevorgang des mit Schüttgut gefüllten Kippaufbaus zu beginnen, und
- Überwachen des Schwerpunkts des Kippaufbaus während des Entladevorgangs mittels der Sensoreinrichtung (SE), um das Entladen der Ladung festzustellen.

15. Verfahren nach Anspruch 14, bei dem die Sensoreinrichtung (SE) während des Kippens des Kippaufbaus einen Kippwinkel des Kippaufbaus und eine Gewichtskraft des Kippaufbaus bestimmt.

16. Verfahren nach Anspruch 15, bei dem eine Kennlinie bereitgestellt wird, die bei fortschreitendem Aufstellen des Kippaufbaus den Kippwinkel und die Gewichtskraft verknüpft, um den Schwerpunkt des Kippaufbaus zu bestimmen.

17. Verfahren nach Anspruch 14, bei dem die Sensoreinrichtung (SE) während des Kippens des Kippaufbaus an einem ersten Punkt des Kippaufbaus und an einem vom ersten Punkt verschiedenen zweiten Punkt jeweils eine Gewichtskraft des Kippaufbaus bestimmt.

18. Verfahren nach Anspruch 17, bei dem eine Kennlinie bereitgestellt wird, die bei fortschreitendem Aufstellen des Kippaufbaus die gemessenen Gewichtskräfte verknüpft, um den Schwerpunkt des Kippaufbaus zu bestimmen.

19. Verfahren nach einem der Ansprüche 14 bis 18, bei dem die Sensoreinrichtung (SE) beim Kippen des Kippaufbaus im Falle eines ausbleibenden Abrutschens der Ladung in Abhängigkeit eines einstellbaren Kippwinkels ein Signal abgibt.

20. Verfahren nach Anspruch 19, bei der das Signal dazu verwendet wird, ein weiteres Kippen der Kippeinrichtung zu unterbinden, ein optisches oder akustisches Warnsignal abzugeben oder eine Aufzeichnung in einem Datenschreiber zu aktivieren.

21. Kippsattelanhänger, der eine Vorrichtung nach einem der Ansprüche 1 bis 13 aufweist.

22. Computerlesbares Medium, auf dem Befehle abgespeichert sind, die es einem oder mehreren Rechnern ermöglichen, ein Verfahren nach einem der Ansprüche 14 bis 20 auszuführen.

## Claims

1. Device for monitoring the unloading of a dump truck (KF), in particular of a dump truck (KF) loaded with bulk material (SG) as a load, which dump truck comprises a dump structure to be filled with a load, in particular a dump body (KM) of a dump semitrailer, and a sensor apparatus (SE) connected to the dump structure, **characterized in that** the sensor apparatus is suitable for determining a center of gravity of the dump structure when the dump structure is tipped in order to detect the unloading of the load.

2. Device according to claim 1, wherein the sensor apparatus (SE) determines a weight force of the dump structure and a tipping angle of the dump structure relative to the dump truck (KF).

3. Device according to claim 2, wherein the sensor apparatus (SE) determines a weight force of the dump structure in each case at a first point of the dump structure and at a second point that is different from the first point.

4. Device according to either claim 2 or claim 3, wherein the sensor apparatus (SE) for determining the weight force comprises a measuring apparatus of an air pressure suspension system, which apparatus determines an air pressure of the air suspension system (LF).

5. Device according to either claim 2 or claim 3, wherein the sensor apparatus (SE) for determining the weight force comprises a force sensor which is preferably formed as a pressure plate and which determines a bearing force of the dump structure on a tipping axis.

6. Device according to either claim 2 or claim 3, wherein the sensor apparatus (SE) for determining the weight force comprises a pressure sensor (DS) which determines a pressure force of a telescopic device (TV) that is provided for tipping the dump structure.

7. Device according to any of claims 2 to 3, wherein the sensor apparatus (SE) for determining the weight force comprises a tire pressure sensor (RD) which determines a tire pressure of one or more tires of an axle (SAA) arranged beneath the dump structure.

8. Device according to any of claims 1 to 7, wherein the sensor apparatus (SE) comprises a rotation sensor which determines the tipping angle of the dump structure.

9. Device according to any of claims 1 to 7, wherein the sensor apparatus (SE) comprises an acceleration sensor which determines the tipping angle of the dump structure.

10. Device according to any of claims 1 to 9, wherein the sensor apparatus (SE) emits a signal if the load does not slide off from an adjustable tipping angle of the dump structure.

11. Device according to claim 10, wherein the signal prevents further tipping of the dump structure, emits a visible or audible warning signal (WE) or activates a recording in a data recorder.

12. Device according to any of claims 1 to 11, wherein the sensor apparatus (SE) is also connected to an inclination-angle sensor which outputs a lateral inclination of the dump truck.

13. Device according to any of claims 1 to 12, wherein the sensor apparatus (SE) signals a sliding off of the load in order to indicate the end of the unloading process.

14. Method for monitoring the unloading of a dump truck, wherein the following steps are carried out:
- providing a dump structure of a dump truck (KF),
- providing a sensor apparatus (SE) which is connected to the dump structure,
- tipping the dump structure in order to begin an unloading process of the dump structure filled with bulk material, and
- monitoring the center of gravity of the dump structure during the unloading process by means of the sensor apparatus (SE) in order to detect the unloading of the load.

15. Method according to claim 14, wherein the sensor apparatus (SE) determines a tipping angle of the dump structure and a weight force of the dump structure during the tipping of the dump structure.

16. Method according to claim 15, wherein a characteristic curve is provided which, as the dump structure is progressively set upright, links the tipping angle and the weight force in order to determine the center of gravity of the dump structure.

17. Method according to claim 14, wherein the sensor apparatus (SE) determines a weight force of the dump structure during the tipping of the dump structure in each case at a first point of the dump structure and at a second point that is different from the first point.

18. Method according to claim 17, wherein a characteristic curve is provided which, as the dump structure is progressively set upright, links the measured weight forces in order to determine the center of gravity of the dump structure.

19. Method according to any of claims 14 to 18, wherein the sensor apparatus (SE) emits a signal if the load does not slide off when the dump structure is tipped, on the basis of an adjustable tipping angle.

20. Method according to claim 19, wherein the signal is used to prevent further tipping of the tipping apparatus, to emit a visible or audible warning signal or to activate a recording in a data recorder.

21. Dump semitrailer, comprising a device according to any of claims 1 to 13.

22. Computer-readable medium, on which instructions are stored that enable one or more computers to carry out a method according to any of claims 14 to 20.

## Revendications

1. Dispositif de surveillance du déchargement d'un véhicule à benne basculante (KF), en particulier d'un véhicule à benne basculante (KF) chargé d'un matériau en vrac (SG) comme charge, comprenant une benne basculante à remplir d'une charge, en particulier une benne basculante (KM) d'une semi-remorque basculante, et un dispositif de détection (SE) relié à la benne basculante, **caractérisé en ce que** le dispositif de détection est adapté pour déterminer un centre de gravité de la benne basculante lors de son basculement afin de détecter le déchargement de la charge.

2. Dispositif selon la revendication 1, dans lequel le dispositif de détection (SE) détermine un poids de la benne basculante et un angle de basculement de la benne basculante par rapport au véhicule à benne basculante (KF).

3. Dispositif selon la revendication 2, dans lequel le dispositif de détection (SE) détermine un poids de la benne basculante à un second point de la benne basculante différent du premier point.

4. Dispositif selon l'une des revendications 2 à 3, dans lequel le dispositif de détection (SE) destiné à déterminer le poids comprend un dispositif de mesure d'une suspension de pression de pneumatique qui détermine une pression de pneumatique de la suspension pneumatique (LF).

5. Dispositif selon l'une des revendications 2 à 3, dans lequel le dispositif de détection (SE) destiné à déterminer le poids comprend un capteur de force, de préférence réalisé sous la forme d'une plaque de pression, qui détermine une force d'appui de la benne basculante sur un axe de basculement.

6. Dispositif selon l'une des revendications 2 à 3, dans lequel le dispositif de détection (SE) comprend un capteur de pression (DS) destiné à déterminer le poids, lequel capteur de pression détermine une force de pression d'un dispositif télescopique (TV) prévu pour faire basculer la benne basculante.

7. Dispositif selon l'une des revendications 2 à 3, dans lequel le dispositif de détection (SE) comprend un capteur de pression de pneumatique (RD) destiné à déterminer le poids, lequel capteur de pression de pneumatique détermine la pression d'un ou de plusieurs pneumatiques d'un essieu (SAA) disposé sous la benne basculante.

8. Dispositif selon l'une des revendications 1 à 7, dans lequel le dispositif de détection (SE) comprend un capteur de rotation qui détermine l'angle de basculement de la benne basculante.

9. Dispositif selon l'une des revendications 1 à 7, dans lequel le dispositif de détection (SE) comprend un capteur d'accélération qui détermine l'angle de basculement de la benne basculante.

10. Dispositif selon l'une des revendications 1 à 9, dans lequel le dispositif de détection (SE) émet un signal lorsque la charge ne glisse pas à partir d'un angle de basculement réglable de la benne basculante.

11. Dispositif selon la revendication 10, dans lequel le signal empêche un autre basculement de la benne basculante, émet un signal d'avertissement (WE) optique ou sonore ou active un enregistrement dans un enregistreur de données.

12. Dispositif selon l'une des revendications 1 à 11, dans lequel le dispositif de détection (SE) est en outre relié à un capteur d'angle de basculement qui produit une inclinaison latérale du véhicule à benne basculante.

13. Dispositif selon l'une des revendications 1 à 12, dans lequel le dispositif de détection (SE) signale un glissement de la charge pour indiquer la fin du processus de déchargement.

14. Procédé de surveillance du déchargement d'un véhicule à benne basculante, dans lequel les étapes suivantes sont réalisées :
- fourniture d'une benne basculante de véhicule à benne basculante (KF),
- fourniture d'un dispositif de détection (SE) relié à la benne basculante,
- basculement de la benne basculante pour commencer à décharger la benne basculante remplie de matériau en vrac, et
- surveillance du centre de gravité de la benne basculante lors du déchargement, au moyen du dispositif de détection (SE), afin d'évaluer le déchargement de la charge.

15. Procédé selon la revendication 14, dans lequel le dispositif de détection (SE) détermine, lors du basculement de la benne basculante, un angle de basculement de la benne basculante et un poids de la benne basculante.

16. Procédé selon la revendication 15, dans lequel une courbe caractéristique est prévue, laquelle courbe caractéristique, lors de la mise en place progressive de la benne basculante, associe l'angle de basculement et le poids afin de déterminer le centre de gravité de la benne basculante.

17. Procédé selon la revendication 14, dans lequel le dispositif de détection (SE) détermine un poids de la benne basculante à un premier point de la benne basculante et à un second point différent du premier point lors du basculement de la benne basculante.

18. Procédé selon la revendication 17, dans lequel une courbe caractéristique est prévue, laquelle courbe caractéristique, lors de la mise en place progressive de la benne basculante, associe le poids mesuré afin de déterminer le centre de gravité de la benne basculante.

19. Procédé selon l'une des revendications 14 à 18, dans lequel le dispositif de détection (SE) émet un signal lors du basculement de la benne basculante lorsque la charge ne glisse pas en fonction d'un angle de basculement réglable.

20. Procédé selon la revendication 19, dans lequel le signal permet d'empêcher un basculement ultérieur du dispositif de basculement, d'émettre un signal d'avertissement visuel ou sonore ou d'activer un enregistrement dans un enregistreur de données.

21. Semi-remorque basculante comportant un dispositif selon l'une des revendications 1 à 13.

22. Support lisible par ordinateur, sur lequel sont stockées des instructions permettant à un ou à plusieurs ordinateurs d'exécuter un procédé selon l'une des revendications 14 à 20.
